(19) Europäisches Patentamt
European Patent Office
Office européen des brevets

(11) EP 4 674 891 A1

(12) EUROPEAN PATENT APPLICATION
published in accordance with Art. 153(4) EPC

(43) Date of publication:
**07.01.2026 Bulletin 2026/02**

(21) Application number: **23925244.8**

(22) Date of filing: **28.02.2023**

(51) International Patent Classification (IPC):
***C08G 73/10*** *(2006.01)* ***B29C 67/04*** *(2017.01)*
***C08J 5/00*** *(2006.01)* ***B29K 79/00*** *(2006.01)*

(52) Cooperative Patent Classification (CPC):
**B29C 67/04; C08G 73/10; C08J 5/00;**
B29K 2079/00

(86) International application number:
**PCT/JP2023/007413**

(87) International publication number:
**WO 2024/180687 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **UBE Corporation**
**Ube-shi, Yamaguchi 755-8633 (JP)**

(72) Inventors:
- **MURAYAMA, Hirotaka**
  **Ube-shi, Yamaguchi 755-8633 (JP)**
- **INOUE, Shohei**
  **Ube-shi, Yamaguchi 755-8633 (JP)**

(74) Representative: **Hoffmann Eitle**
**Patent- und Rechtsanwälte PartmbB**
**Arabellastraße 30**
**81925 München (DE)**

# (54) POLYIMIDE POWDER FOR MOLDED BODY, AND POLYIMIDE MOLDED BODY

(57) Provided is a polyimide powder for a molded body having an average primary particle size of 9 μm or less and a volume average particle size determined by laser diffraction/scattering of 10 μm or more and 80 μm or less.

(A)

(B)

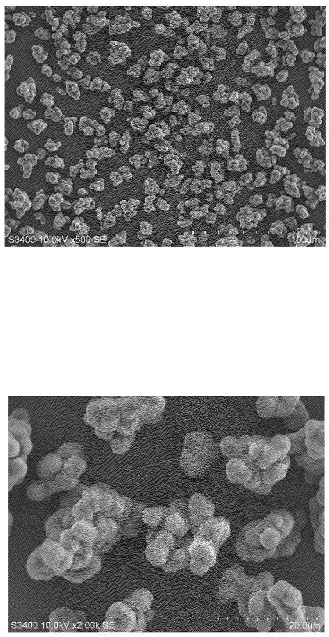


Fig. 1

EP 4 674 891 A1

## Description

TECHNICAL FIELD

The present invention relates to a polyimide powder for a molded body and a polyimide molded body formed from the same.

BACKGROUND ART

Polyimides, which are produced from a tetracarboxylic acid component and a diamine component as the main raw materials, are excellent in properties such as heat resistance, mechanical strength, electrical properties, and solvent resistance, and have been widely used as materials for electrical and electronic parts and the like. In particular, polyimide powders produced by processing a polyimide into powder have been widely used as materials for producing parts for industrial production apparatuses because they can be formed into desired molded bodies by placing these in a mold and applying pressure, for example.

A known method for producing a polyimide molded body using such a polyimide powder is, for example, a hot press molding method (heating compression molding method) of sintering a polyimide powder under compression conditions in a compression machine such as a press (for example, see Patent Document 1). The hot press molding method requires a step of performing compression molding again after the heat treatment of the pressed powder.

In contrast, for example, Patent Document 2 discloses a method of producing a polyimide resin molded article, wherein a polyimide molded article is produced using a polyimide powder which is prepared by reacting pyromellitic dianhydride with 4,4'-diaminodiphenyl ether and has an average particle size (average primary particle size) of 0.1 to 9 μm and an imide-ring closure ratio of 50 to 95%, the method comprising two steps below:

(1) a first step of applying a pressure of more than 294.2 MPa and 980.7 MPa or less to the polyimide powder at a temperature lower than 100°C; and
(2) a second step of heating the pressed powder obtained in the first step at 350 to 500°C at ambient pressure in vacuum or in an inert gas atmosphere.

In the technique disclosed in Patent Document 2, a polyimide powder having an average particle size (average primary particle size) of 0.1 to 9 μm is used, and Patent Document 2 teaches that use of a polyimide powder in which growth by secondary aggregation is not observed is desired.

RELATED ART DOCUMENTS

PATENT DOCUMENTS

Patent Document 1: JP H02-122906 A
Patent Document 2: JP 2013-107956 A

SUMMARY OF THE INVENTION

PROBLEM TO BE SOLVED BY THE INVENTION

On the other hand, the technique disclosed in Patent Document 2 has a problem of giving a polyimide molded body having insufficient mechanical strength which is derived from the use of a polyimide powder whose average particle size (average primary particle size) is 0.1 to 9 μm and secondary aggregation is suppressed.

The present invention has been made to solve the above problem. An object of the present invention is to provide a polyimide powder which can give a polyimide molded body having high mechanical strength.

MEANS FOR SOLVING PROBLEMS

The present inventors, who have conducted extensive research to solve the problem, have found that a polyimide powder having an average primary particle size of 9 μm or less and a volume average particle size determined by laser diffraction/scattering of 10 μm or more and 80 μm or less has high processability and can give a polyimide molded body having high mechanical strength, and have completed the present invention.

Specifically, the present invention provides [1] to [14] below.

[1] A polyimide powder for a molded body having an average primary particle size of 9 μm or less and a volume average particle size determined by laser diffraction/scattering of 10 μm or more and 80 μm or less.
[2] The polyimide powder for a molded body according to [1], wherein the polyimide powder has a 5% weight loss temperature of 595°C or higher.
[3] The polyimide powder for a molded body according to [1] or [2], wherein the polyimide powder has a span value of 0.65 or more and 1.5 or less, the span value being calculated by Expression (I) below from a cumulative 10% volume particle size D10, a cumulative 50% volume particle size D50, and a cumulative 90% volume particle size D90 measured by laser diffraction/scattering:

$$\text{span value} = (D90 - D10)/D50 \quad (I)$$

[4] The polyimide powder for a molded body according to any one of [1] to [3], wherein the polyimide powder has a volume average particle size of 10 μm or more and 35 μm or less.
[5] The polyimide powder for a molded body according to any one of [1] to [3], wherein the polyimide powder has a volume average particle size of 20 μm or more and 80 μm or less.
[6] The polyimide powder for a molded body according to [4], wherein the polyimide powder has a moisture absorption rate of 1.27% or less.
[7] The polyimide powder for a molded body according to [5], wherein the polyimide powder has a cohesion strength of 30 or less.
[8] The polyimide powder for a molded body according to any one of [1] to [7], wherein the polyimide powder when fired at 500°C gives a polyimide molded body having a flexural strength of 70 MPa or more.
[9] A polyimide molded body formed by molding the polyimide powder for a molded body according to any one of [1] to [8].
[10] The polyimide molded body according to [9] which is molded and sintered by a hot press molding method of performing sintering under compression conditions by a compression machine or a direct forming method of performing compression molding under normal temperature and then sintering under non-compression conditions.
[11] A part for a semiconductor manufacturing apparatus, the part comprising the polyimide molded body according to [9] or [10].
[12] An automobile part comprising the polyimide molded body according to [9] or [10].

EFFECTS OF THE INVENTION

The present invention provides a polyimide powder for a molded body which can give a polyimide molded body having high mechanical strength.

BRIEF DESCRIPTION OF DRAWINGS

[Fig. 1]
Fig. 1 is an SEM image of a polyimide powder in Example 1.
[Fig. 2]
Fig. 2 is an SEM image of a polyimide powder in Example 4.
[Fig. 3]
Fig. 3 is an SEM image of a polyimide powder in Comparative Example 2.

DESCRIPTION OF EMBODIMENTS

<Polyimide powder>

The polyimide powder for a molded body according to the present invention is a polyimide powder which has an average primary particle size of 9 μm or less, has a volume average particle size determined by laser diffraction/scattering of 10 μm or more and 80 μm or less, and is used for production of a polyimide molded body.
In the present invention, the term "polyimide molded body" refers to a concept which encompasses not only a molded body obtained by molding a polyimide powder into a predetermined shape, but also a fired body or sintered body obtained by firing or sintering such a molded body. In other words, in the present invention, the polyimide molded body

refers to a concept also including a polyimide fired body and a polyimide sintered body.

Likewise, in the present invention, the term "polyimide powder for a molded body" refers to a concept which encompasses a polyimide powder used in production of not only a polyimide molded body but also a polyimide fired body and a polyimide sintered body. In other words, in the present invention, the polyimide powder for a molded body refers to a concept also including a polyimide powder for a fired body and a polyimide powder for a sintered body.

In the present invention, the average primary particle size of the polyimide powder for a molded body is the average of diameters of primary particles of polyimide particles contained in the polyimide powder. The volume average particle size of the polyimide powder for a molded body measured by laser diffraction/scattering is the volume average of secondary particle sizes (particle sizes of secondary particles formed as a result of aggregation of a plurality of polyimide primary particles) of the polyimide powder. Specifically, in the polyimide powder for a molded body according to the present invention, at least part of the primary particles having an average particle size of 9 μm or less is aggregated, and thus the volume average of secondary particle sizes falls within the range of 10 μm or more and 80 μm or less.

The polyimide powder for a molded body according to the present invention has an average primary particle size of 9 μm or less, preferably 8 μm or less, more preferably 7 μm or less. The average primary particle size is preferably 2 μm or more, more preferably 3 μm or more, still more preferably 4 μm or more. When the average primary particle size is too large, a polyimide molded body to be obtained has poor mechanical strength.

In the present invention, the average primary particle size can be determined by measurement using an SEM image obtained by observing the polyimide powder for a molded body with a scanning electron microscope (SEM). Specifically, the average primary particle size can be determined using the obtained SEM image by specifying polyimide particles (primary particles) contained in the polyimide powder for a molded body, measuring the particle sizes of the polyimide particles, and averaging the measured particle sizes (primary particle sizes). In this determination, any 50 or more polyimide particles as the subject for measurement may be measured for particle size, and the average may be determined from the obtained results of measurement.

The polyimide powder for a molded body according to the present invention has a volume average particle size determined by laser diffraction/scattering of 10 μm or more and 80 μm or less, preferably 11 μm or more, more preferably 12 μm or more, still more preferably 13 μm or more. The volume average particle size is preferably 70 μm or less, more preferably 60 μm or less, still more preferably 50 μm or less. When the volume average particle size is too small or too large, a polyimide molded body to be obtained has poor mechanical strength.

In the polyimide powder for a molded body according to the present invention, the volume average particle size determined by laser diffraction/scattering is preferably 10 μm or more and 35 μm or less, more preferably 20 μm or less, still more preferably 19 μm or less, further still more preferably 18 μm or less from the viewpoint of achieving high mechanical strength and further reducing the moisture absorption rate of the polyimide powder for a molded body according to the present invention. In the polyimide powder for a molded body according to the present invention, the volume average particle size determined by laser diffraction/scattering is preferably 20 μm or more and 80 μm or less, more preferably 23 μm or more, still more preferably 25 μm or more from the viewpoint of achieving high mechanical strength and further reducing the cohesive properties of the polyimide powder for a molded body according to the present invention, thus further enhancing the processability.

The volume average particle size can be determined by measurement by laser diffraction/scattering using a laser diffraction/scattering particle size distribution analyzer. When primary particles are aggregated, usually, the aggregated particle size (secondary particle size) is measured by laser diffraction/scattering.

Although the polyimide powder for a molded body according to the present invention should have an average primary particle size and a volume average particle size within the ranges above, preferably, the ratio "volume average particle size/average primary particle size" is 2 or more and 10 or less. In the polyimide powder for a molded body according to the present invention, the ratio "volume average particle size/average primary particle size" is more preferably 2 or more and 5 or less, still more preferably 3 or more, further still more preferably 4 or less from the viewpoint of achieving high mechanical strength and further reducing the moisture absorption rate of the polyimide powder for a molded body according to the present invention. In the polyimide powder for a molded body according to the present invention, the ratio "volume average particle size/average primary particle size" is preferably 3 or more and 10 or less, more preferably 4 or more, still more preferably 5 or more, further still more preferably 6 or more, and more preferably 9 or less, still more preferably 8 or less, further still more preferably 7 or less from the viewpoint of achieving high mechanical strength and further reducing the cohesive properties of the polyimide powder for a molded body according to the present invention, thus further enhancing the processability.

Although the polyimide powder for a molded body according to the present invention should have an average primary particle size and a volume average particle size within the ranges above, the 5% weight loss temperature is preferably 595°C or higher, more preferably 600°C or higher, still more preferably 605°C or higher. The upper limit of the 5% weight loss temperature is preferably 650°C or lower, although not particularly limited thereto. When the 5% weight loss temperature falls within the ranges above, the polyimide powder can have high resistance to thermal decomposition, thereby increasing the process margin and enabling more stable production of a polyimide molded body.

Furthermore, in the polyimide powder for a molded body according to the present invention, the span value calculated by Expression (I) below from the cumulative 10% volume particle size D10, cumulative 50% volume particle size D50, and the cumulative 90% volume particle size D90 measured by laser diffraction/scattering is preferably 0.65 or more and 1.5 or less, more preferably 0.7 or more, still more preferably 1.4 or less.

$$\text{span value} = (D90 - D10)/D50 \quad (I)$$

In the present invention, by controlling the average primary particle size and the volume average particle size within the ranges above and in addition, by controlling the cumulative 10% volume particle size D10, the cumulative 50% volume particle size D50, and the cumulative 90% volume particle size D90 to give a span value within the above ranges, the resulting polyimide powder for a molded body can give a polyimide molded body having higher mechanical strength.

In the polyimide powder for a molded body according to the present invention, the span value is more preferably 0.7 or more and 1.0 or less, still more preferably 0.7 or more and 0.8 or less from the viewpoint of achieving high mechanical strength and further reducing the moisture absorption rate of the polyimide powder for a molded body according to the present invention. In the polyimide powder for a molded body according to the present invention, the span value is more preferably 0.75 or more and 1.4 or less, still more preferably 0.8 or more, further still more preferably 1.35 or less from the viewpoint of achieving high mechanical strength and further reducing the cohesion properties of the polyimide powder for a molded body according to the present invention, thus further enhancing the processability.

In the polyimide powder for a molded body according to the present invention, the volatile matter content is preferably 0.01% by weight or more and 0.75% by weight or less. The volatile matter content is more preferably 0.1% by weight or more and 0.4% by weight or less, still more preferably 0.15% by weight or more, further still more preferably 0.35% by weight or less from the viewpoint of achieving high mechanical strength and further reducing the moisture absorption rate of the polyimide powder for a molded body according to the present invention.

By controlling the volume average particle size to 10 μm or more and 35 μm or less, the moisture absorption rate of the polyimide powder for a molded body according to the present invention is controlled to fall within the range of preferably 1.27% or less, more preferably 1.25% or less, still more preferably 1.23% or less. The lower limit of the moisture absorption rate is preferably 0.01% or more, although not particularly limited thereto. The moisture absorption rate can be determined as follows: for example, a moisture absorption test is performed by drying the polyimide powder before secondary drying under a nitrogen atmosphere at 260°C for 8 hours, then, drying the polyimide powder under the air (namely, under the air and ambient pressure (hereinafter, the same is applied)) at 150°C for 30 minutes, and leaving the polyimide powder for 30 minutes in an environment at 23°C and 40 %Rh, and the weight before and after the moisture absorption test is measured.

Alternatively, by controlling the volume average particle size to 20 μm or more and 80 μm or less, the cohesion strength of the polyimide powder for a molded body according to the present invention falls within the range of preferably 30 or less, more preferably 20 or less. The lower limit of the cohesion strength is preferably 5 or more, although not particularly limited thereto. The cohesion strength is determined by determining the degree of volume reduction to the tapping number (cumulative), and calculating the cohesion strength based on the Kawakita's equation below. A lower cohesion strength indicates that the polyimide powder for a molded body has higher processability.

$$\text{cohesion strength} = 1/b$$

Kawakita's equation:

$$N/C = (1/ab) + (1/a) \times N$$

$$C = (V0 - VN)/V0$$

a, b: constants; N: tapping number; C: degree of volume reduction;
V0: initial volume; VN: powder volume after tapping is performed N times

Furthermore, the polyimide powder for a molded body according to the present invention when fired at 500°C gives a polyimide molded body having a flexural strength of preferably 70 MPa or more, more preferably 75 MPa or more, still more preferably 80 MPa or more. The upper limit of the flexural strength is preferably 120 MPa or less, although not particularly limited thereto. A higher flexural strength can be regarded as indicating higher mechanical strength. The flexural strength is determined by obtaining a molded body by a method in Examples described later, measuring the obtained molded body for strength at break six times using a flexural strength tester, and calculating the average.

The polyimide powder for a molded body according to the present invention can have any chemical structure as long as it has the above-mentioned physical properties. Preferably, the polyimide powder for a molded body contains a polyimide containing a repeating unit represented by Formula (1) below, as the main component (50 mol% or more). It contains more preferably 75 mol% or more, still more preferably 90 mol% or more of the polyimide. The method of producing the polyimide powder will be described later.

[Chem. 1]

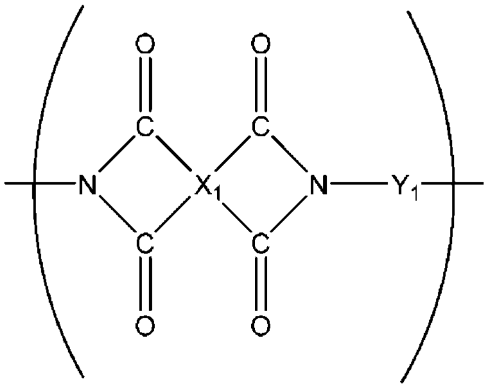

(1)

where $X_1$s are one or two or more of tetravalent groups in aromatic and aliphatic tetracarboxylic acids excluding the carboxyl groups, and $Y_1$s are one or two or more of divalent groups in aromatic and aliphatic diamines excluding the amino groups.

In Formula (1) above, $X_1$s can be either an aromatic group or an aliphatic group. Preferred is an aromatic group. Preferably 50 mol% or more, more preferably 70 mol% or more, still more preferably 90 mol% or more (extremely preferably 100 mol%) of $X_1$s is an aromatic group.

Since part or all of the polyimide powder for a molded body containing a polyimide containing such a repeating unit represented by General Formula (1) never melts during application of pressure and/or firing in production of a molded body, a molded body having a good appearance can be obtained. In addition, because the polyimide powder for a molded body containing a repeating unit represented by General Formula (1) is insoluble in a variety of organic solvents, a molded body having high dimensional stability can be obtained. Specifically, the polyimide powder for a molded body according to the present invention does not dissolve in a variety of organic solvents under ambient temperature (23°C) conditions, and is dispersed or precipitated and insoluble therein.

In Formula (1) above, $X_1$s as an aromatic group are preferably one or two or more tetravalent groups in tetracarboxylic acids having an aromatic ring excluding the carboxyl groups, more preferably tetravalent groups having an aromatic ring with no substituents, particularly preferably tetravalent groups represented by Formulae (2) to (6) below.

[Chem. 2]

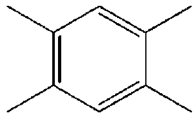

(2)

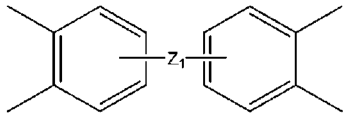

(3)

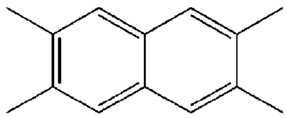

(4)

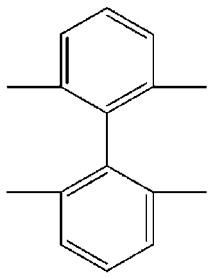

(5)

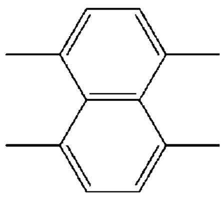

(6)

In Formula (3), $Z_1$ is a direct bond or one of divalent groups represented by the following formulae. In the following formulae, $W_1$ represents a divalent organic group, $W_2$ and $W_3$ each independently represent an amide bond, an ester bond, or a carbonyl bond, and $W_4$ represents an organic group containing an aromatic ring.

[Chem. 3]

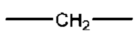 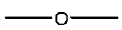 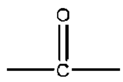 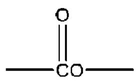

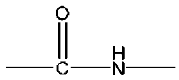 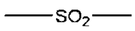 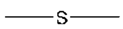 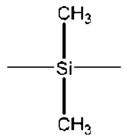

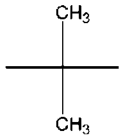 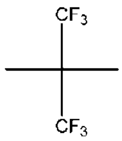 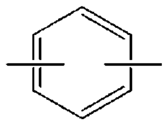

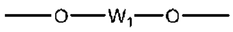 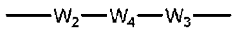

Specific examples of $W_1$ include aliphatic hydrocarbon groups having 2 to 24 carbon atoms and aromatic hydrocarbon groups having 6 to 24 carbon atoms. Specific examples of $W_4$ include aromatic hydrocarbon groups having 6 to 24 carbon atoms.

Preferred examples of compounds used as raw materials for forming the tetravalent groups represented by Formulae (2) to (6) above (also referred to as "aromatic tetracarboxylic acid component" in some cases) include tetravalent groups derived from aromatic tetracarboxylic dianhydrides such as 3,3',4,4'-biphenyltetracarboxylic dianhydride, 2,3,3',4'-biphenyltetracarboxylic dianhydride, 2,2',3,3'-biphenyltetracarboxylic dianhydride, 1,2,4,5-benzenetetracarboxylic dianhydride, benzophenonetetracarboxylic dianhydride, 4,4'-oxydiphthalic dianhydride, diphenylsulfonetetracarboxylic dianhydride, p-terphenyltetracarboxylic dianhydride, and m-terphenyltetracarboxylic dianhydride. From the viewpoint of solvent resistance and mechanical properties of the polyimide molded body, more preferred are those derived from 3,3',4,4'-biphenyltetracarboxylic dianhydride, 2,3,3',4'-biphenyltetracarboxylic dianhydride, 2,2',3,3'-biphenyltetracarboxylic dianhydride, benzophenonetetracarboxylic dianhydride, diphenylsulfonetetracarboxylic dianhydride, p-terphenyltetracarboxylic dianhydride, or m-terphenyltetracarboxylic dianhydride. Particularly preferred are those derived from 3,3',4,4'-biphenyltetracarboxylic dianhydride or 2,3,3',4'-biphenyltetracarboxylic dianhydride. These aromatic tetracarboxylic acid components may be used alone or in combination.

A tetracarboxylic acid component having an aromatic ring with a substituent can also be used in combination as long as it does not impair the effects of the present invention. Examples of the tetracarboxylic acid component having an aromatic ring with a substituent include halogen-substituted tetracarboxylic dianhydrides such as 5,5'-[2,2,2-trifluoro-1-[3-(trifluoromethyl)phenyl]ethylidene]diphthalic anhydride, 5,5'-[2,2,3,3,3-pentafluoro-1-(trifluoromethyl)propylidene]diphthalic anhydride, 1H-difuro[3,4-b:3',4'-i]xanthene-1,3,7,9(11H)-tetrone, 5,5'-oxybis[4,6,7-trifluoro-pyromellitic anhydride], 3,6-bis(trifluoromethyl)pyromellitic dianhydride, 4-(trifluoromethyl)pyromellitic dianhydride, 1,4-difluoropyromellitic dianhydride, and 1,4-bis(3,4-dicarboxytrifluorophenoxy)tetrafluorobenzene dianhydride. These tetracarboxylic acid components can be used alone or in combination, and may be appropriately selected in consideration of desired properties to be imparted. The amount of the tetracarboxylic acid component having an aromatic ring with a substituent is preferably less than 5 mol% of the total amount of the tetracarboxylic acid components.

In Formula (1) above, $X_1$s as an aliphatic group are hydrocarbon groups which have no aromatic ring and are optionally substituted. $X_1$s as an aliphatic group may be chain aliphatic groups, or may be alicyclic groups. Preferred are alicyclic groups. $X_1$s as an alicyclic group are preferably tetravalent groups having an alicyclic structure having 4 to 40 carbon atoms, more preferably those having at least one aliphatic 4- to 12-membered ring, more preferably those having an aliphatic 4- to 6-membered ring. Preferred examples of tetravalent groups having an aliphatic 4- to 6-membered ring include the followings.

[0050] [Chem. 4]

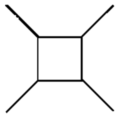
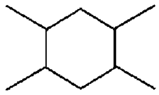
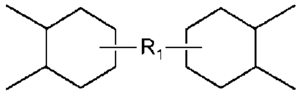
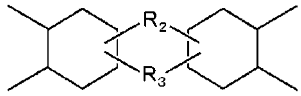
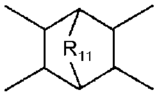
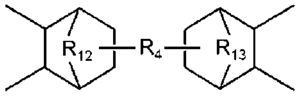
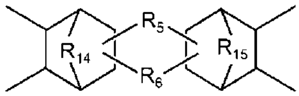
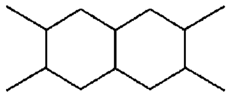
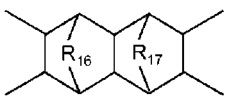
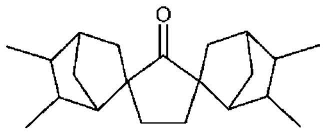
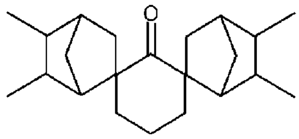
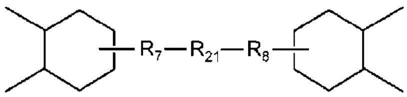
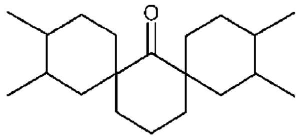
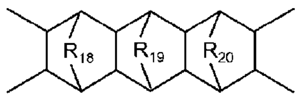

(where $R_1$ to $R_8$ each independently represent a direct bond or a divalent organic group; $R_{11}$ to $R_{20}$ each independently represent one selected from the group consisting of groups represented by a formula: $-CH_2-$, $-CH=CH-$, $-CH_2CH_2-$, -O-, or -S-; and $R_{21}$ represents an organic group containing an aromatic or alicyclic structure.)

Specific examples of $R_1$, $R_2$, $R_3$, $R_4$, $R_5$, $R_6$, $R_7$, and $R_8$ include a direct bond, aliphatic hydrocarbon groups having 1 to 6 carbon atoms, an oxygen atom (-O-), a sulfur atom (-S-), a carbonyl bond, an ester bond, and an amide bond.

Examples of $R_{21}$ which is an organic group containing an aromatic ring include the followings.

[Chem. 5]

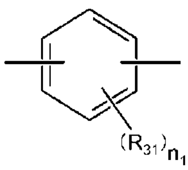
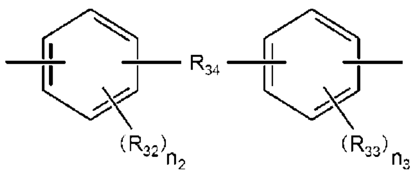

(where $R_{34}$ is a direct bond or a divalent organic group, $n_1$ to $n_3$ each independently represent an integer of 0 to 4, and $R_{31}$, $R_{32}$, and $R_{33}$ each independently represent an alkyl group having 1 to 6 carbon atoms, a halogen group, a hydroxyl group, a carboxyl group, or a trifluoromethyl group.)

Specific examples of $R_{34}$ include a direct bond, divalent groups represented in Formula (7) below, and divalent groups represented in Formula (8) below.

[Chem. 6]

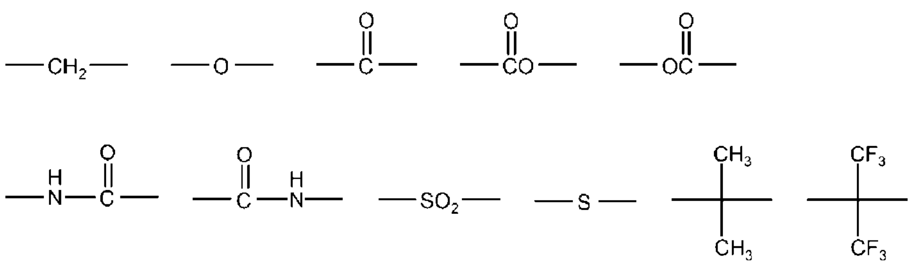

(7)

[Chem. 7]

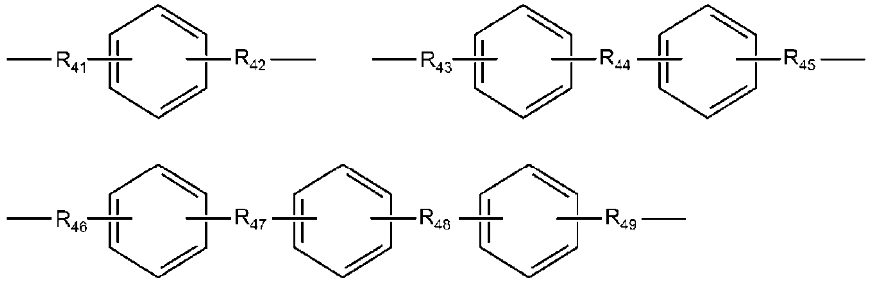

(8)

(in Formula (8), $R_{41}$ to $R_{49}$ each independently represent a direct bond or one of the divalent groups represented in Formula (7).)

Particularly preferred tetravalent groups having an alicyclic structure are those shown below.

[Chem. 8]

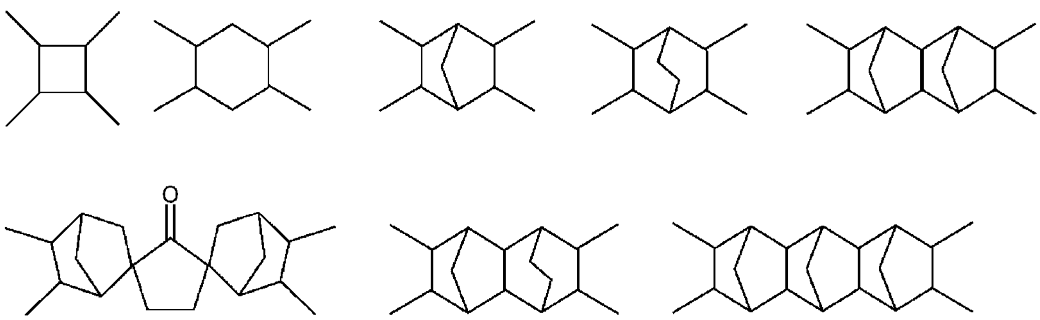

Examples of tetracarboxylic acid components which give $X_1$ as an alicyclic group include 1,2,3,4-cyclobutanetetracarboxylic dianhydride, cyclohexane-1,2,4,5-tetracarboxylic dianhydride, [1,1'-bi(cyclohexane)]-3,3',4,4'-tetracarboxylic dianhydride, [1,1'-bi(cyclohexane)]-2,3,3',4'-tetracarboxylic dianhydride, [1,1'-bi(cyclohexane)]-2,2',3,3'-tetracarboxylic dianhydride, 4,4'-methylenebis(cyclohexane-1,2-dicarboxylic anhydride), 4,4'-(propane-2,2-diyl)bis(cyclohexane-1,2-dicarboxylic anhydride), 4,4'-oxybis(cyclohexane-1,2-dicarboxylic anhydride), 4,4'-thiobis(cyclohexane-1,2-dicarboxylic anhydride), 4,4'-sulfonylbis(cyclohexane-1,2-dicarboxylic anhydride), 4,4'-(dimethylsilanediyl) bis(cyclohexane-1,2-dicarboxylic anhydride), 4,4'-(tetrafluoropropane-2,2-diyl)bis(cyclohexane-1,2-dicarboxylic anhydride), octahydropentalene-1,3,4,6-tetracarboxylic dianhydride, bicyclo[2.2.1]heptane-2,3,5,6-tetracarboxylic dianhydride, 6-(carboxymethyl)bicyclo[2.2.1]heptane-2,3,5-tricarboxylic dianhydride, bicyclo[2.2.2]octane-2,3,5,6-tetracarboxylic dianhydride, bicyclo[2.2.2]octa-5-ene-2,3,7,8-tetracarboxylic dianhydride, tricyclo[4.2.2.0$^{2,5}$]decane-3,4,7,8-tetracarboxylic dianhydride, tricyclo[4.2.2.0$^{2,5}$]deca-7-ene-3,4,9,10-tetracarboxylic dianhydride, 9-oxatricyclo[4.2.1.0$^{2,5}$] nonane-3,4,7,8-tetracarboxylic dianhydride, norbornane-2-spiro-$\alpha$-cyclopentanone-$\alpha$'-spiro-2"-norbornane 5,5",6,6"-tetracarboxylic dianhydride, (4arH,8acH)-decahydro-1t,4t:5c,8c-dimethanonaphthalene-2c,3c,6c,7c-tetracarboxylic dianhydride, (4arH,8acH)-decahydro-1t,4t:5c,8c-dimethanonaphthalene-2t,3t,6c,7c-tetracarboxylic dianhydride, decahydro-1,4-ethano-5,8-methanonaphthalene-2,3,6,7-tetracarboxylic dianhydride, tetradecahydro-1,4:5,8:9,10-trimethanoanthracene-2,3,6,7-tetracarboxylic dianhydride, and the like. These can be used alone or in combination.

Examples of tetracarboxylic acid components which give $X_1$ as a chain aliphatic group include linear or branched tetracarboxylic dianhydrides having about 4 to 10 carbon atoms, such as 1,2,3,4-butanetetracarboxylic dianhydride and 1,2,3,4-pentanetetracarboxylic dianhydride.

In Formula (1) above, $Y_1$s may be either an aromatic group or an aliphatic group. Preferred is an aromatic group. Preferably 50 mol% or more, more preferably 70 mol% or more, still more preferably 90 mol% or more (extremely preferably 100 mol%) of $Y_1$s are an aromatic group.

In Formula (1) above, $Y_1$s as an aromatic group are preferably one or two or more divalent groups in diamines having an aromatic ring excluding the amino groups, more preferably divalent groups having an aromatic ring with no substituents, particularly preferably divalent groups represented by Formulae (9) and (10) below. A diamine having a heterocyclic ring is also preferred.

[Chem. 9]

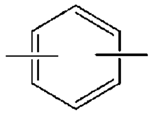

(9)

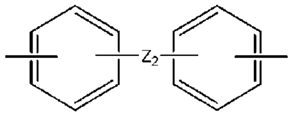

(10)

In the formula (10) above, $Z_2$ is a direct bond or one of divalent groups represented by the following formulae.

[Chem. 10]

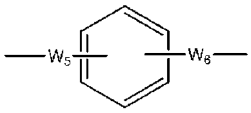

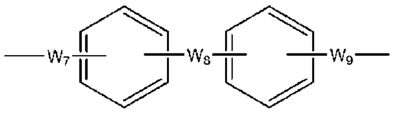

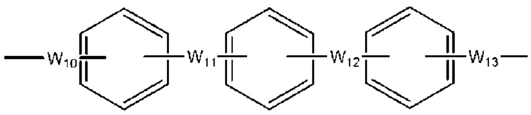

In the above formulae, $W_5$ to $W_{13}$ each independently represent a direct bond or one of divalent groups represented by the following formulae.

[Chem. 11]

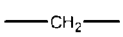

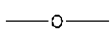

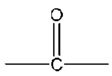

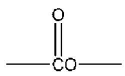

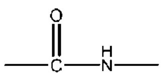

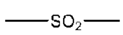

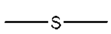

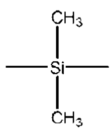

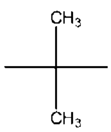

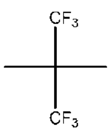

Preferred examples of compounds usable as a raw material for forming the divalent group represented by Formula (9) or (10) above (also referred to as "aromatic diamine component" in some cases) include p-phenylenediamine, m-phenylenediamine, 3,4'-diaminodiphenyl ether, 4,4'-diaminodiphenyl ether, 4,4'-diaminodiphenylmethane, 4,4"-diaminoterphenyl, 5 (6)-amino-2-(4-aminophenyl)-benzimidazole, 1,3-bis(4-aminophenoxy)benzene, and the like. From the viewpoint of the solvent resistance and mechanical properties of the polyimide molded body, use of p-phenylenediamine is more preferred. The aromatic diamine components can be used alone or in combination.

Examples of $Y_1$ as a group having an alicyclic structure include the followings.

[Chem. 12]

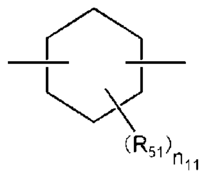
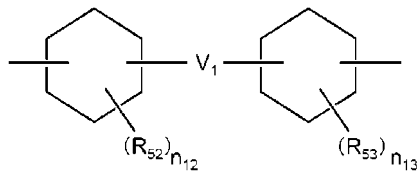
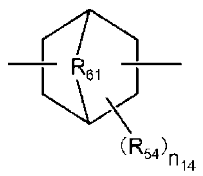
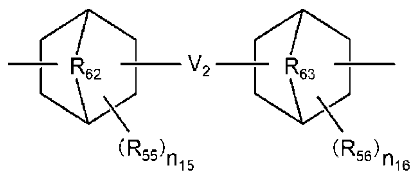

(where $V_1$ and $V_2$ each independently represent a direct bond or a divalent organic group, $n_{11}$ to $n_{16}$ each independently represent an integer of 0 to 4, $R_{51}$ to $R_{56}$ each independently represent an alkyl group having 1 to 6 carbon atoms, a halogen group, a hydroxyl group, a carboxyl group, or a trifluoromethyl group, and $R_{61}$, $R_{62}$, and $R_{63}$ each independently represent one selected from the group consisting of groups represented by Formula: $-CH_2-$, $-CH=CH-$, $-CH_2CH_2-$, -O-, or -S-.)

Specific examples of $V_1$ and $V_2$ include a direct bond and the divalent groups represented in Formula (7) above.

A diamine component having an aromatic ring with a substituent can also be used in combination as long as it does not impair the effects of the present invention. Examples thereof include halogen substituted diamines such as 2,4-toluenediamine, 3,3'-dihydroxy-4,4'-diaminobiphenyl, bis(4-amino-3-carboxyphenyl)methane, 2,2'-bis(trifluoromethyl)-4,4'-diaminobiphenyl, 2,3,5,6-tetrafluoro-1,4-diaminobenzene, 2,4,5,6-tetrafluoro-1,3-diaminobenzene, 2,3,5,6-tetrafluoro-1,4-benzene (dimethaneamine), 2,2'-difluoro(1,1'-biphenyl)-4,4'-diamine, 4,4'-diaminooctafluorobiphenyl, and 4,4'-oxybis(2,3,5,6-tetrafluoroaniline). These diamine components can be used alone or in combination. An appropriate one can be selected in consideration of desired properties to be imparted. The amount of the diamine component having a an aromatic ring with a substituent is preferably less than 5 mol% of the total amount of the diamine components.

Examples of diamine components which give $Y_1$ having an alicyclic structure include 1,4-diaminocyclohexane, 1,4-diamino-2-methylcyclohexane, 1,4-diamino-2-ethylcyclohexane, 1,4-diamino-2-n-propylcyclohexane, 1,4-diamino-2-isopropylcyclohexane, 1,4-diamino-2-n-butylcyclohexane, 1,4-diamino-2-isobutylcyclohexane, 1,4-diamino-2-sec-butylcyclohexane, 1,4-diamino-2-tert-butylcyclohexane, 1,2-diaminocyclohexane, 1,3-diaminocyclobutane, 1,4-bis(aminomethyl)cyclohexane, 1,3-bis(aminomethyl)cyclohexane, diaminobicycloheptane, diaminomethylbicycloheptane, diaminooxybicycloheptane, diaminomethyloxybicycloheptane, isophoronediamine, diaminotricyclodecane, diaminomethyltricyclodecane, bis(aminocyclohexyl)methane, bis(aminocyclohexyl)isopropylidene, 6,6'-bis(3-aminophenoxy)-3,3,3',3'-tetramethyl-1,1'-spirobiindane, and 6,6'-bis(4-aminophenoxy)-3,3,3',3'-tetramethyl-1,1'-spirobiindane. These diamine components may be used alone or in combination.

<Method for producing polyimide powder for molded body>

Next, the method for producing the polyimide powder for a molded body according to the present invention will be described by way of a representative example thereof. The method for producing the polyimide powder for a molded body according to the present invention can be any method as long as it can control the average primary particle size to 9 μm or less and control the volume average particle size determined by laser diffraction/scattering to the range of 10 μm or more and 80 μm or less. Preferred is a method of obtaining a polyamic acid using a tetracarboxylic acid component and a diamine component as raw materials (hereinafter, also referred to as "monomer components" collectively), and subjecting the polyamic acid to an imidization reaction, thereby, precipitating polyimide powder, for example.

Initially, a step of forming a polyamic acid will be described. The polyamic acid preferably contains a repeating unit represented by Formula (11) below.

[Chem. 13]

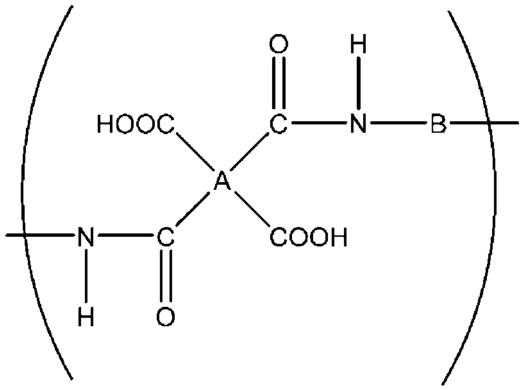

(11)

In Formula (11) above, As are one or two or more tetravalent groups selected from those in aromatic and aliphatic tetracarboxylic acids excluding the carboxyl groups, and Bs are one or two or more divalent groups selected from those in aromatic and aliphatic diamines excluding the amino groups.

In Formula (11) above, A may be either an aromatic group or an aliphatic group. Preferred is an aromatic group. Preferably 50 mol% or more, more preferably 70 mol% or more, still more preferably 90 mol% or more (extremely preferably 100 mol%) of As is an aromatic group.

In Formula (11) above, the aromatic group A is preferably a tetravalent group having an aromatic ring with no substituents, particularly preferably a tetravalent group represented by any of Formulae (2) to (6).

Preferred examples of compounds used as raw materials for forming the tetravalent groups represented by the Formulae (2) to (6) (also referred to as "aromatic tetracarboxylic acid component" in some cases) include tetravalent groups derived from aromatic tetracarboxylic dianhydrides such as 3,3',4,4'-biphenyltetracarboxylic dianhydride, 2,3,3',4'-biphenyltetracarboxylic dianhydride, 2,2',3,3'-biphenyltetracarboxylic dianhydride, 1,2,4,5-benzene tetracarboxylic dianhydride, benzophenonetetracarboxylic dianhydride, 4,4'-oxydiphthalic dianhydride, diphenylsulfonetetracarboxylic dianhydride, p-terphenyltetracarboxylic dianhydride, m-terphenyltetracarboxylic dianhydride. From the viewpoint of the solvent resistance and mechanical properties of the polyimide molded body, preferred are those derived from 3,3',4,4'-biphenyltetracarboxylic dianhydride, 2,3,3',4'-biphenyltetracarboxylic dianhydride, 2,2',3,3'-biphenyltetracarboxylic dianhydride, benzophenonetetracarboxylic dianhydride, diphenylsulfonetetracarboxylic dianhydride, p-terphenyltetracarboxylic dianhydride, or m-terphenyltetracarboxylic dianhydride, and particularly preferred are those derived from 3,3',4,4'-biphenyltetracarboxylic dianhydride or 2,3,3',4'-biphenyltetracarboxylic dianhydride. These aromatic tetracarboxylic acid components may be used alone or in combination.

A tetracarboxylic acid component having an aromatic ring with a substituent can also be used in combination as long as it does not impair the effects of the present invention. Examples thereof include halogen-substituted tetracarboxylic dianhydrides such as 5,5'-[2,2,2-trifluoro-1-[3-(trifluoromethyl)phenyl]ethylidene]diphthalic anhydride, 5,5'-[2,2,3,3,3-pentafluoro-1-(trifluoromethyl)propylidene]diphthalic anhydride, 1H-difuro[3,4-b:3',4'-i]xanthene-1,3,7,9(11H)-tetrone, 5,5'-oxybis[4,6,7-trifluoro-pyromellitic anhydride], 3,6-bis(trifluoromethyl)pyromellitic dianhydride, 4-(trifluoromethyl)pyromellitic dianhydride, 1,4-difluoropyromellitic dianhydride, and 1,4-bis(3,4-dicarboxytrifluorophenoxy)tetrafluorobenzene dianhydride. These tetracarboxylic acid components can be used alone or in combination. An appropriate one can be selected in consideration of desired properties to be imparted. The amount of the tetracarboxylic acid component having an aromatic ring with a substituent is preferably less than 5 mol% of the total amount of the tetracarboxylic acid components.

As the compound used as a raw material for forming an aliphatic group A in Formula (11) above (also referred to as "aliphatic tetracarboxylic acid component" in some cases), an alicyclic tetracarboxylic dianhydride can be suitably used.

Specific examples of alicyclic tetracarboxylic dianhydrides include (1S,2R,4S,5R)-cyclohexanetetracarboxylic dianhydride, cis,cis,cis-1,2,4,5-cyclohexanetetracarboxylic dianhydride, (1S,2S,4R,5R)-cyclohexanetetracarboxylic dianhydride, (1R,2S,4S,5R)-cyclohexanetetracarboxylic dianhydride, bicyclo[2.2.2]octane-2,3,5,6-tetracarboxylic dianhydride, bicyclo[2.2.2]oct-7-ene-2,3,5,6-tetracarboxylic dianhydride, 4-(2,5-dioxotetrahydrofuran-3-yl)-tetralin-1,2-dicarboxylic anhydride, tetrahydrofuran-2,3,4,5-tetracarboxylic dianhydride, bicyclo-3,3',4,4'-tetracarboxylic dianhydride, 1,2,3,4-cyclopentanetetracarboxylic dianhydride, 1,2,3,4-cyclobutanetetracarboxylic dianhydride (hereinafter, also referred to as "CBDA" in some cases), 1,3-dimethyl-1,2,3,4-cyclobutanetetracarboxylic dianhydride, 1,4-dimethyl-1,2,3,4-cyclobutanetetracarboxylic dianhydride, 1,2,3,4-cyclohexanetetracarboxylic dianhydride, pentacyclo [8.2.1.$1^{4,7}$.$0^{2,9}$.$0^{3,8}$] tetradecane-5, 6, 11, 12-tetracarboxylic dianhydride, 5-(2,5-dioxotetrahydrofuryl)-3-methyl-3-cyclohexene-1,2-dicarboxylic anhydride, cyclohexa-1-ene-2,3,5,6-tetracarboxylic dianhydride, bicyclo[2.2.1]heptane-2,3,5,6-tetracarboxylic dianhydride, and the like. These may be used alone or as a mixture thereof.

In Formula (11) above, Bs are either an aromatic group or an aliphatic group. Preferred is an aromatic group. Preferably 50 mol% or more, more preferably 70 mol% or more, still more preferably 90 mol% or more (extremely preferably 100 mol%) of Bs is an aromatic group.

In Formula (11) above, the aromatic group Bs are preferably divalent groups having an aromatic ring with no substituents, particularly preferably the divalent groups represented in Formulae (9) and (10).

Preferred examples of compounds used as a raw material for forming the divalent groups in Formula (9) or (10) (also referred to as "aromatic diamine component" in some cases) include p-phenylenediamine, m-phenylenediamine, 3,4'-diaminodiphenyl ether, 4,4'-diaminodiphenyl ether, 4,4'-diaminodiphenylmethane, 4,4"-diaminoterphenyl, 5 (6)-amino-2-(4-aminophenyl)-benzimidazole, 1,3-bis(4-aminophenoxy)benzene, and the like. From the viewpoint of the solvent resistance and mechanical properties of the polyimide molded body, use of p-phenylenediamine is more preferred. These aromatic diamine components can be used alone or in combination.

A diamine component having an aromatic ring with a substituent may also be used as long as it does not impair the effects of the present invention. Examples thereof include halogen-substituted diamines such as 2,4-toluenediamine, 3,3'-dihydroxy-4,4'-diaminobiphenyl, bis(4-amino-3-carboxyphenyl)methane, 2,2'-bis(trifluoromethyl)-4,4'-diaminobiphenyl, 2,3,5,6-tetrafluoro-1,4-diaminobenzene, 2,4,5,6-tetrafluoro-1,3-diaminobenzene, 2,3,5,6-tetrafluoro-1,4-benzene (dimethaneamine), 2,2'-difluoro(1,1'-biphenyl)-4,4'-diamine, 4,4'-diaminooctafluorobiphenyl, and 4,4'-oxybis(2,3,5,6-tetrafluoroaniline). These diamine components can be used alone or in combination. An appropriate one can be selected in consideration of desired properties to be imparted. The amount of the diamine component having an aromatic ring with a substituent is preferably less than 5 mol% in the amount of the diamine components.

As the compound used as a raw material for forming an aliphatic group B in Formula (11) above (also referred to as "aliphatic diamine component" in some cases), an alicyclic diamine can be suitably used.

Specific examples of alicyclic diamines include 1,4-diaminocyclohexane, 1,4-diamino-2-methylcyclohexane, 1,4-diamino-2-ethylcyclohexane, 1,4-diamino-2-n-propylcyclohexane, 1,4-diamino-2-isopropylcyclohexane, 1,4-diamino-2-n-butylcyclohexane, 1,4-diamino-2-isobutylcyclohexane, 1,4-diamino-2-sec-butylcyclohexane, 1,4-diamino-2-tert-butylcyclohexane, 1,2-diaminocyclohexane, 1,3-diaminocyclobutane, 1,4-bis(aminomethyl)cyclohexane, 1,3-bis(aminomethyl)cyclohexane, diaminobicycloheptane, diaminomethylbicycloheptane, diaminooxybicycloheptane, diaminomethyloxybicycloheptane, isophoronediamine, diaminotricyclodecane, diaminomethyltricyclodecane, bis(aminocyclohexyl)methane, bis(aminocyclohexyl)isopropylidene, 6,6'-bis(3-aminophenoxy)-3,3,3',3'-tetramethyl-1,1'-spirobiindane, 6,6'-bis(4-aminophenoxy)-3,3,3',3'-tetramethyl-1,1'-spirobiindane, and the like. These diamine components can be used alone or in combination.

Such a polyamic acid can be obtained by using substantially equimolar amounts of the tetracarboxylic acid component and the diamine component and reacting them in a solvent, optionally under heating, to a desired viscosity (or molecular weight). In the present invention, the term "substantially equimolar amounts" means that the molar ratio of the tetracarboxylic acid component and the diamine component is about 0.90 or more and about 1.10 or less, preferably about 0.95 or more and about 1.05 or less. The monomer components used to form the polyamic acid are mainly composed of the tetracarboxylic acid component and the diamine component described above.

Any solvent can be used as a solvent used in synthesis of a polyamic acid without limitation, and a known solvent used in synthesis of a polyamic acid can be selected and used. For example, from the viewpoint of the solubility of the monomer components or the polyamic acid, at least one or more nitrogen-containing solvents are preferably selected. From the viewpoint of the thermal imidization temperature, preferred is a solvent having a boiling point of 100°C or higher. Examples of such a solvent include N-methyl-2-pyrrolidone, N-ethyl-2-pyrrolidone, N,N-dimethylformamide, N,N-dimethylacetamide, 1,1,3,3-tetramethylurea, 1,3-dimethyl-2-imidazolidinone, N,N-dimethylisobutylamide, N,N-dimethylpropionamide, and the like.

The polyamic acid can be produced by placing the monomer components and the solvent in a reactor equipped with a stirrer, and stirring the mixture. These raw materials can be added in any order without limitation. For example, a predetermined amount of the diamine component may be dissolved in the solvent and then the tetracarboxylic acid component may be added thereto. Alternatively, the tetracarboxylic acid component may be dissolved in the solvent and then the diamine component may be added thereto. Alternatively, the tetracarboxylic acid component and the diamine component may be alternately added. Additives such as known reaction catalysts may be added at any timing as needed.

The reaction temperature at which the reaction is performed is preferably 0°C or higher and 100°C or lower, more preferably 10°C or higher, still more preferably 20°C or higher, although not particularly limited thereto. The reaction temperature is more preferably 90°C or lower, still more preferably 70°C or lower. By adjusting the reaction temperature within the ranges above, a polyimide powder in which coloring and variation in mechanical properties are reduced can be produced. The temperature can be constant, or can be appropriately increased or decreased.

In the next step, the resulting polyamic acid solution is heated to cause a thermal imidization reaction at preferably 150°C or higher and 250°C or lower, more preferably 180°C or higher and 220°C or lower.

In the present invention, when the polyamic acid solution is heated to cause a thermal imidization reaction,

preferably, by allowing the thermal imidization reaction to proceed by stirring under predetermined conditions, polyimide particles contained in the polyimide powder are insolubilized as the thermal imidization reaction proceeds. Thereby, preferably, the polyimide powder finally obtained is controlled to have an average primary particle size and a volume average particle size determined by laser diffraction/scattering within the above ranges.

According to the knowledge of the present inventors, it can be said that there is a certain degree of correlation between factors such as the stirring conditions and the heating rate in thermal imidization, and the composition of the polyimide and the average primary particle size and the volume average particle size of the polyimide powder finally obtained when the thermal imidization reaction is allowed to proceed to give a polyimide powder containing insoluble polyimide particles. For example, a higher stirring speed when the thermal imidization reaction is performed tends to lead to a larger average primary particle size of the polyimide powder finally obtained and a smaller volume average particle size thereof. A lower stirring speed when the thermal imidization reaction is performed tends to lead to a smaller average primary particle size of the polyimide powder finally obtained and a larger volume average particle size thereof. Furthermore, a higher stirring speed when the thermal imidization reaction is performed tends to lead to a smaller ratio of the volume average particle size of the polyimide powder finally obtained to the average primary particle size thereof, "volume average particle size/average primary particle size". In addition, a higher heating rate (for example, the heating rate in heating from 120°C to 173°C) when the thermal imidization reaction is performed tends to lead to a larger average primary particle size and volume average particle size of the polyimide powder finally obtained, and a lower heating rate tends to lead to a smaller average primary particle size and volume average particle size of the polyimide powder finally obtained. Furthermore, the average primary particle size and volume average particle size of the polyimide powder finally obtained also tend to be affected by the shape of the stirring blade of the stirrer, the configuration thereof, the shape and size of the stirring tank, and the stirring temperature in addition to the stirring speed and the heating rate, and also tend to change depending on the composition of the polyimide. In the present invention, suitably, by adjusting these, the average primary particle size and volume average particle size of the polyimide powder are controlled.

According to the knowledge of the present inventors, when the conditions other than the stirring speed are the same, a higher stirring speed tends to lead to a larger average primary particle size of the polyimide powder finally obtained and a smaller volume average particle size thereof while a lower stirring speed tends to lead to a smaller average primary particle size of the polyimide powder finally obtained and a larger volume average particle size. Thus, it is considered desirable to control of the stirring speed well, but any method other than the method of controlling the stirring speed can be used without limitation. In other words, the above-mentioned tendency due to a change in stirring speed shows the same tendency irrespective of the stirring system, while a suitable stirring speed itself actually differs depending on the stirring system. Even if the stirring speed is the same and if a condition other than the stirring speed (such as the shape of the stirring blade of the stirrer, the configuration thereof, the shape and size of the stirring tank, or the stirring temperature) is different, the stirring state in the stirring tank is likely to be different, and thus the polyimide powder finally obtained also is likely to have a different average primary particle size, a different volume average particle size, and a different ratio "volume average particle size/average primary particle size".

For example, a case will be described where a polyimide powder having an average primary particle size of 9 μm or less and a volume average particle size of 10 μm or more and 35 μm or less is obtained using an example of a typical stirring system, that is, a 1000-L to 3000-L stirring tank equipped with one anchor-shaped stirring blade having a blade size of 600 to 900 mm in length, 550 to 850 mm in height, and 50 to 150 mm in width. Here, the stirring speed is preferably 30 rpm or higher and 60 rpm or lower, more preferably 30 rpm or higher and 55 rpm or lower, still more preferably 30 rpm or higher and 50 rpm or lower. The stirring time for the imidization reaction is preferably 2 to 5 hours.

Alternatively, when a polyimide powder having an average primary particle size of 9 μm or less and a volume average particle size of 10 μm or more and 35 μm or less is obtained using another example of a typical stirring system different from that described above, that is, a 500-L to 900-L stirring tank equipped with three propeller-shaped stirring blades each having a diameter of 500 to 700 mm, the stirring speed is preferably 50 rpm or higher and 200 rpm or lower, more preferably 75 rpm or higher, still more preferably 100 rpm or higher. The stirring speed is preferably 150 rpm or lower, more preferably 125 rpm or lower. The stirring time for the imidization reaction is preferably 2 to 5 hours.

Alternatively, when a polyimide powder having an average primary particle size of 9 μm or less and a volume average particle size of 10 μm or more and 35 μm or less is obtained using further another example of a typical stirring system different from that described above, that is, a 2-L to 10-L stirring tank equipped with one anchor-shaped stirring blade having a blade size of 110 to 150 mm in length, 100 to 130 mm in height, and 10 to 20 mm in width, the stirring speed is preferably 250 rpm or higher and 350 rpm or lower, more preferably 250 rpm or higher and 300 rpm or lower, still more preferably 280 rpm or higher and 300 rpm or lower. The stirring time for the imidization reaction is preferably 2 to 5 hours.

Alternatively, a case will be described where a polyimide powder having an average primary particle size of 9 μm or less and having a volume average particle size of 20 μm or more and 80 μm or less is obtained using an example of a typical stirring system, that is, a 2-L to 10-L stirring tank equipped with one anchor-shaped stirring blade having a blade size of 110 to 150 mm in length, 100 to 130 mm in height, and 10 to 20 mm in width. Here, the stirring speed is preferably 30 rpm or higher and 150 rpm or lower, more preferably 50 rpm or higher, still more preferably 75 rpm or higher. The stirring speed

is more preferably 150 rpm or lower, still more preferably 125 rpm or lower. The stirring time for the imidization reaction is preferably 2 to 5 hours.

Alternatively, when a polyimide powder having an average primary particle size of 9 μm or less and a volume average particle size of 20 μm or more, 80 μm or less is obtained using another example of a typical stirring system different from that described above, that is, a 1000-L to 3000-L stirring tank equipped with one anchor-shaped stirring blade having a blade size of 600 to 900 mm in length, 550 to 850 mm in height, and 50 to 150 mm in width, the stirring speed is preferably 5 rpm or higher and 25 rpm or lower, more preferably 10 rpm or higher, still more preferably 15 rpm or higher. The stirring speed is preferably 25 rpm or lower, more preferably 20 rpm or lower. The stirring time for the imidization reaction is preferably 2 to 5 hours.

When the polyamic acid solution is heated to cause a thermal imidization reaction, the stirring system used in preparation of the polyamic acid solution may be used as is, or the polyamic acid solution may be transferred to a stirring system different from the stirring system used in preparation of the polyamic acid solution, and then thermally imidized.

The thermal imidization reaction is preferably performed under conditions which provide an imidization ratio of 95% or more, preferably 98% or more. The imidization ratio can be measured by infrared spectroscopy according to a normal method.

Subsequently, the solution containing the polyimide powder which is insolubilized by the thermal imidization reaction is subjected to a centrifugation operation, followed by washing and drying to obtain a polyimide powder for a molded body according to the present invention. In an embodiment, after washing is performed, a centrifugation operation may be performed, followed by drying as needed.

Although the washing operation after the centrifugation operation is performed is not particularly limited, from the viewpoint of ease of the operation, the washing method can be appropriately selected from a method of rinsing the polyimide powder obtained through the centrifugation operation with a washing liquid, a method of placing the polyimide powder obtained through the centrifugation operation to a vessel separately prepared, placing a washing liquid thereto, and stirring to perform washing, and the like.

The washing liquid used in the washing step is not particularly limited, and can be any liquid which does not dissolve the polyimide powder. Preferred are hydrophilic solvents such as water or alcohols. Any alcohol can be used as the washing liquid without limitation. From the viewpoint of removing the solvent, the imidizing agent, and the like present with the polyimide powder, preferred are alcohols having 5 or less carbon atoms in total, such as methanol, ethanol, and isopropyl alcohol, and particularly preferred is isopropyl alcohol. From the viewpoint of controlling the volatile matter content, a washing liquid having a boiling point of 150°C or lower, more preferably 100°C or lower may be selected in use. These washing liquids can be used alone, or can be used as a mixture with another washing liquid as needed.

The amount of the washing liquid relative to the polyimide powder is not particularly limited. From the viewpoint of industrial productivity, its amount is preferably at most 10 times the mass of the polyimide powder immediately after filtration. The amount of the washing liquid relative to the polyimide powder herein is the amount of the washing liquid used per washing.

In the next step, the polyimide powder after subjected to washing is preferably dried. The drying can be performed at any temperature. For example, from the viewpoint of suppressing decomposition of the polyimide powder, the temperature is preferably 400°C or lower, more preferably 350°C or lower, still more preferably 300°C or lower, particularly preferably 200°C or lower. The lower limit of the temperature can be set to preferably 80°C or higher, more preferably 100°C or higher, particularly preferably 110°C or higher.

The drying of the polyimide powder may be performed under ambient pressure, or may be performed under reduced pressure conditions. The drying may be performed under atmospheric air, or may be performed under an inert gas atmosphere. From the viewpoint of suppressing the decomposition of the polyimide powder, the drying is preferably performed under an inert gas atmosphere. Alternatively, it can be also done in a mixed gas of atmospheric air and an inert gas, or the drying may be performed under atmospheric air followed by an inert gas atmosphere, or may be performed under an inert gas atmosphere followed by atmospheric air.

The drying time can be appropriately adjusted in consideration of the volatile matter content. From the viewpoint of a suppression in decomposition of the polyimide powder and industrial productivity, the drying is performed in preferably 36 hours or shorter, more preferably 24 hours or shorter, particularly preferably 18 hours or shorter. The lower limit of the drying time is preferably 30 minutes or longer, more preferably 1 hour or longer, although not particularly limited thereto.

Such a washing step and/or such a drying step may be repeated multiple times, or the washing step and the drying step may be alternately repeated. In the case where the washing step or the drying step is performed multiple times, the multiple washing steps or drying steps may not necessarily be performed under the same conditions, and the conditions may be appropriately varied.

<Polyimide molded body>

The polyimide molded body according to the present invention is formed by molding the above-mentioned

polyimide powder for a molded body according to the present invention.

In the present invention, a molded body can be produced as follows: for example, the polyimide powder for a molded body is placed in a powder molding machine, and is molded into a predetermined shape at room temperature by uniaxial pressing, and the molded product is subjected to pressureless firing.

The pressure when performing the uniaxial pressing can be selected from an optimal range for the production apparatus. From the viewpoint of improving the mechanical properties of the polyimide molded body and preventing cracks in the polyimide molded body, it is preferably 10 MPa or more and 50 MPa or less, more preferably 20 MPa or more and 50 MPa or less, particularly preferably 25 MPa or more and 50 MPa or less. The compression molding time in the uniaxial pressing is preferably 0.5 minutes or more and 5 minutes or less, more preferably 1 minute or more and 3 minutes or less.

The pressureless firing is performed under atmospheric air at a firing temperature of preferably 300°C or higher and 600°C or lower, more preferably 350°C or higher and 550°C or lower. In the pressureless firing, molding and firing may be performed at the same time, thereby obtaining a polyimide fired molded body. The heating rate during the pressureless firing is preferably 5°C/min or more, more preferably 10°C/min or more, and preferably 30°C/min or less, more preferably 20°C/min or less. The firing time during the pressureless firing is preferably 5 minutes or more, more preferably 15 minutes or more, and preferably 120 minutes or less, more preferably 60 minutes or less. Furthermore, when the pressureless firing is performed, a temperature holding process to hold the temperature may be performed in the temperature increasing process. In the temperature increasing process, the temperature holding process may be performed once, or may be performed multiple times. For example, when the temperature holding process is performed once, the holding temperature in the temperature holding process is preferably 30°C or higher, more preferably 50°C or higher, and preferably 100°C or lower, more preferably 80°C or lower, and the holding time is preferably 10 minutes or more, more preferably 30 minutes or more, and preferably 120 minutes or less, more preferably 60 minutes or less. For example, when the temperature holding process is performed twice, the holding temperature in the second temperature holding process is preferably 100°C or higher, more preferably 150°C or higher, and preferably 250°C or lower, more preferably 200°C or lower, and the holding time is preferably 10 minutes or more, more preferably 30 minutes or more, and preferably 120 minutes or less, more preferably 60 minutes or less.

Furthermore, when the polyimide molded body according to the present invention is produced, the polyimide powder for a molded body can be combined and used with any filler. Examples of fillers usable include, but should not be particularly limited to, inorganic fillers such as glass fibers, ceramic fibers, boron fibers, glass beads, whisker, diamond powder, alumina, silica, natural mica, synthetic mica, alumina, carbon black, silver powder, copper powder, aluminum powder, nickel powder, metal fibers, ceramic fibers, whisker, silicon carbide, silicon oxide, alumina, magnesium powder, titanium powder, carbon fibers, and graphite; and organic fillers such as fluorine-containing resins and aramid fibers. These fillers may be used alone or in a combination of two or more fillers.

The amount of the filler used can be selected depending on the application. For example, the filler can be used in an amount within the range of 1 to 50% by mass based on the weight of the polyimide powder.

Alternatively, the polyimide molded body according to the present invention may be produced by placing the polyimide powder for a molded body according to the present invention in a mold, and applying pressure and heat simultaneously or separately to perform heating/compression molding (namely, may be produced by a hot press molding method). Examples of apparatuses for producing the polyimide molded body in the heating/compression molding include four-column hydraulic presses high-pressure hot presses, WIP systems, and the like. Alternatively, for example, a pre-molded body may be formed by a method using a Wet-CIP, a Dry-CIP, a high-pressure press, a hydraulic press, a rotary press, or a tablet machine, and then, may be subjected to the heating/compression molding.

As described above, the polyimide powder for a molded body according to the present invention can be used in a variety of production methods with a wide range of conditions since it can fully demonstrate the properties of the polyimide. For this reason, its industrial availability is high. In particular, since the polyimide powder for a molded body according to the present invention can exhibit excellent mechanical properties even in the method involving compression molding at ambient temperature (23°C) and the pressure defined above, and then sintering under no compression (so-called direct forming), polyimide molded bodies having a variety of shapes can be produced at high productivity according to the present invention.

The polyimide molded body obtained according to the present invention can be suitably used as parts for semiconductor manufacturing apparatuses, such as pins, guides, evaluation sockets, vacuum pads in semiconductor manufacturing related apparatuses; automobile parts and aerospace parts such as bushes, seal rings, trust washers, bearing retainers, piston rings, locknut inserts in the automotive and aerospace industry; and bearing sleeves, roller bushes, piston rings, and the like in industrial machine related apparatuses.

EXAMPLES

Hereinafter, the present invention is more specifically described based on examples and comparative examples.

The present invention should not be construed as limited to the examples.

Measurement methods used in the examples below are shown.

<Average primary particle size of polyimide powder>

Each of polyimide powders was observed with a scanning electron microscope (SEM). Using the obtained SEM image, particle sizes of 50 polyimide particles contained in the polyimide powder were measured, and the measured particle sizes were averaged to determine the average primary particle size of the polyimide powder. Fig. 1 shows the SEM image in Example 1, Fig. 2 shows the SEM image in Example 4, and Fig. 3 shows the SEM image in Comparative Example 2.

<Measurement of polyimide powder for cumulative 10% volume particle size D10, cumulative 50% volume particle size D50, cumulative 90% volume particle size D90, and volume average particle size>

Polyimide powders were prepared as test samples. Using a laser diffraction/scattering particle size distribution analyzer (product name "LA-920", available from HORIBA Ltd.), each polyimide powder was measured for cumulative 10% volume particle size D10, cumulative 50% volume particle size D50, cumulative 90% volume particle size D90, and volume average particle size. The span value was calculated from the following expression:
span value = (D90 - D10)/D50

<Volatile matter content in polyimide powder>

Polyimide powders were prepared as test samples. Using a thermogravimetric analyzer (product name "Q5000IR", available from TA Instruments-Waters Corporation, LLC), each polyimide powder was heated from 25°C to 700°C at a heating rate of 20°C/min under a nitrogen atmosphere. From the obtained weight curve, the weight loss ratio from 50 to 350°C was determined.

<Moisture absorption rate of polyimide powder>

Polyimide powders before secondary drying were prepared as test samples. Each test sample was dried at 260°C for 8 hours under a nitrogen atmosphere, and then dried at 150°C for 30 minutes in atmospheric air. Thereafter, the test sample after drying was left to stand in an environment at 23°C and 40 %Rh for 30 minutes, thereby performing a moisture absorption test. The weights of the test sample before and after the moisture absorption test were measured to determine the moisture absorption rate.

<5% Weight loss temperature of polyimide powder>

Polyimide powders were prepared as test samples. Using a thermogravimetric analyzer (product name "Q5000IR", available from TA Instruments-Waters Corporation, LLC), each test sample was heated from 25°C to 700°C at a heating rate 10°C/min in a nitrogen stream. From the obtained weight curve, the 5% weight loss temperature was determined where the weight at 150°C was regarded as 100%.

<Cohesion strength of polyimide powder>

Polyimide powders were prepared as test samples. Each of the polyimide powders was measured for a degree of volume reduction C relative to the tapping number (cumulative) N, the ratio N/C was calculated, and the calculated values of N/C (ordinate) and the values of N (abscissa) were plotted. Based on the Kawakita's equation, the intercept (1/ab) and the slope (1/a) were calculated from the plotted points by the least squares method. At this time, 1/b is the constant related with the cohesion strength of the powder, and this value was determined. Comparative Example 1 was unmeasurable because of its remarkable cohesion.
Kawakita's equation:

$$N/C = (1/ab) + (1/a) \times N$$

$$C = (V0 - VN)/V0$$

a, b: constants; N: tapping number; C: degree of volume reduction;

V0: initial volume; VN: powder volume after tapping is performed N times

The initial volume (V0) and the powder volume (VN) after tapping was performed N times were measured by the following method. Specifically, using a tap density measurement apparatus (product name "Tap Denser KYT-5000k", available from Seishin Enterprise Co., Ltd.), a sieve having a mesh screen size of 300 μm was attached to the apparatus, a stainless steel strainer was attached therebelow, and a tapping cell was disposed therebelow. The polyimide powder was placed into the sieve. Then, vibration was applied to the sieve to allow sample particles to fall onto the cell. Sample particles were allowed to fall and accumulate until the opening edge of the cell was completely covered. The accumulated sample was levelled at the cell opening using a levelling plate to remove the sample outside the cell. The volume at this time was defined as initial volume (V0). The cell was tapped vertically, and the powder volume (VN) relative to the tapping number N was periodically read, and recorded. This procedure was repeated until the content volume in the tapping cell no longer changed.

<Flexural strength of polyimide molded body>

Each of polyimide powders was subjected to uniaxial pressing at room temperature and a pressure of 25 MPa for 1 minute by a powder molding machine, obtaining a polyimide molded body having a size of 5 mm in width, 40 mm in length, and 4 mm in thickness. The resulting polyimide molded body was subjected to pressureless firing under atmospheric air on the following temperature conditions, and then measured at a test speed of 0.5 mm/min using a flexural strength tester. The measurement was performed 6 times, and the average thereof was defined as flexural strength.

(Temperature conditions for pressureless firing)

heating rate: 10°C/min
holding temperature: 50°C
holding time: 30 minutes
firing temperature: 500°C
firing time: 15 minutes

The abbreviations of the compounds used in Examples below are shown below.

s-BPDA: 3,3',4,4'-biphenyltetracarboxylic dianhydride
a-BPDA: 2,3,3',4'-biphenyltetracarboxylic dianhydride
ODPA: 4,4'-oxydiphthalic dianhydride
PPD: p-phenylenediamine
3,4-ODA: 3,4'-diaminodiphenyl ether
TPE-R: 1,3-bis(4-aminophenoxy)benzene
NMP: N-methyl-2-pyrrolidone
IPA: isopropyl alcohol

[Example 1]

800 Kg of NMP, 95.2 kg of s-BPDA, 7.16 kg of a-BPDA, and 37.64 kg of PPD were placed into a 1000-L stirring tank equipped with a stirrer and a nitrogen inlet pipe, and were reacted under a nitrogen atmosphere by stirring at 50°C for 30 minutes, giving a polyimide precursor solution (polyamic acid solution). At this time, s-BPDA:a-BPDA:PPD (molar ratio) was 93:7:100. The stirrer used at this time included one anchor-shaped stirring blade having a blade size of 780 mm in length, 707 mm in height, and 91 mm in width, and the rotational speed was 30 rpm.

In the next step, the resulting polyimide precursor solution was left in the same stirring tank. While the polyimide precursor solution was being stirred at a stirring speed of 30 rpm and the heating rate during heating from 120°C to 173°C was being controlled to 0.78°C/min, the polyimide precursor solution was heated to 200°C. Then, the stirring was continued at 200°C for 120 minutes to allow the thermal imidization reaction to proceed, precipitating polyimide powder. Subsequently, the solution with the resulting polyimide powder was subjected to a centrifugation operation to remove the solution, followed by washing with IPA 4 times. Thereafter, the centrifugation operation was again performed, and then, primary drying was performed under reduced pressure conditions at 120°C for 24 hours using a conical dryer. Thereafter, secondary drying was performed at 255°C for 36 hours under reduced pressure conditions, giving polyimide powder. Then, the resulting polyimide powder was subjected to the measurements described above. The results are shown in

Table 1.

[Examples 2 to 4, Comparative Example 1]

Polyimide powders were obtained in the same manner as in Example 1 except that the conditions were varied as shown in Table 1, and were evaluated likewise. The results are shown in Table 1.
In Example 3, the heating rate during heating from 120°C to 173°C was controlled to 0.94°C/min. In Example 4, the heating rate during heating from 120°C to 173°C was controlled to 0.93°C/min.
In Example 4, the primary drying was performed by leaving the sample to stand under atmospheric air at room temperature (23°C) for 24 hours.
Furthermore, in Examples 2 and 4 and Comparative Example 1, the secondary drying was performed under nitrogen at 260°C for 2 hours.

[Table 1]

Table 1

| | | Ex. 1 | Ex. 2 | Ex. 3 | Ex. 4 | Comp. Ex. 1 |
|---|---|---|---|---|---|---|
| Composition of polyimide (molar ratio) | | | | | | |
| | s-BPDA | 93 | 93 | 93 | 93 | 93 |
| | a-BPDA | 7 | 7 | 7 | 7 | 7 |
| | ODPA | | | | | |
| | PPD | 100 | 100 | 100 | 100 | 100 |
| | 3,4-ODA | | | | | |
| | TPE-R | | | | | |
| Conditions for thermal imidization | | | | | | |
| | Scale of stirring tank [L] | 1000 | 1000 | 1000 | 1000 | 1000 |
| | Heating rate (120-173°C) [(°C/min)] | 0.78 | 0.78 | 0.94 | 0.93 | 0.78 |
| | Stirring speed [rpm] | 30 | 30 | 30 | 17 | 69 |
| Drying conditions | | | | | | |
| | Primary drying atmosphere | Underreduced pressure | Under reduced pressure | Under reduced pressure | Under atmospheric air | Under reduced pressure |
| | Secondary drying atmosphere | Underreduced pressure | Under nitrogen | Under reduced pressure | Under nitrogen | Under nitrogen |
| | Secondary drying temperature [°C] | 255 | 260 | 255 | 260 | 260 |
| | Secondary drying time [hour] | 36 | 2 | 12 | 2 | 2 |

(continued)

| | | | | | | |
|---|---|---|---|---|---|---|
| Properties of polyimide powder | | | | | | |
| | Average primary particle size [μm] | 4.3 | 4.1 | 6.3 | 6.3 | 6.2 |
| | Volume average particle size [μm] | 15.6 | 15.0 | 18.9 | 28.3 | 9.0 |
| | Span value | 0.76 | 0.73 | 0.74 | 0.95 | 0.66 |
| | Volume average particle size/ average primary particle size | 3.6 | 3.7 | 3.0 | 4.5 | 1.5 |
| | <Moisture absorption rate [%] | 1.03 | | 1.09 | - | 1.30 |
| | Volatile matter content [wt%] | 0.26 | 0.18 | 0.17 | 0.17 | 0.18 |
| | 5% weight loss temperature [°C] | 616 | 615 | 616 | 616 | 615 |
| | Cohesion strength | | | | 13.0 | Unmeasurable |
| Properties of polyimide molded body | | | | | | |
| | Flexural strength (fired at 500°C) [MPa] | 96 | 95 | 88 | 88 | 65 |

[Example 5]

800 Kg of NMP, 95.2 kg of s-BPDA, 7.16 kg of a-BPDA, and 37.64 kg of PPD were placed into a 5-L stirring tank equipped with a stirrer and a nitrogen inlet pipe, and were reacted under a nitrogen atmosphere by stirring at 50°C for 30 minutes, giving a polyimide precursor solution (polyamic acid solution). At this time, s-BPDA:a-BPDA:PPD (molar ratio) was 93:7:100. The stirrer used at this time included one anchor-shaped stirring blade having a blade size of 128 mm in length, 116 mm in height, and 15 mm in width, and the stirring speed in the thermal imidization reaction was 100 rpm.

In the next step, the resulting polyimide precursor solution was left in the same stirring tank as it was. While the polyimide precursor solution was being stirred at a stirring speed of 100 rpm, the polyimide precursor solution was heated to 200°C at a heating rate of 1°C/min. Then, the stirring was continued at 200°C for 120 minutes to allow the thermal imidization reaction to proceed, precipitating polyimide powder. Subsequently, the solution with the resulting polyimide powder was subjected to a centrifugation operation to remove the solution, followed by washing with IPA 4 times. Thereafter, the centrifugation operation was again performed, and then, primary drying was performed at 120°C for 24 hours under reduced pressure conditions using a conical dryer. Thereafter, secondary drying was performed at 242°C for 12 hours under reduced pressure conditions, giving polyimide powder. Then, the resulting polyimide powder was subjected to the measurements described above. The results are shown in Table 2.

[Examples 6 to 9, Comparative Examples 2 and 3]

Polyimide powders were obtained in the same manner as in Example 5 except that the conditions were varied as shown in Table 2, and were evaluated likewise. The results are shown in Table 2.

In Examples 6 to 9 and Comparative Examples 2 and 3, the stirring tank used was a 5-L stirring tank equipped with a stirrer and a nitrogen inlet pipe, and the stirrer used included one anchor-shaped stirring blade having a blade size of 128 mm in length, 116 mm in height, and 15 mm in width. The stirring speed in the thermal imidization reaction was 100 rpm or 200 rpm.

In Examples 6 to 9 and Comparative Examples 2 and 3, the primary drying was performed by leaving the solution to stand under atmospheric air at room temperature (23°C) for 24 hours, and the secondary drying was performed under nitrogen at 260°C for 2 hours.

[Table 2]

Table 2

| | Ex. 5 | Ex. 6 | Ex. 7 | Ex. 8 | Ex. 9 | Comp. Ex. 2 | Comp. Ex. 3 |
|---|---|---|---|---|---|---|---|
| Composition of polyimide (molar ratio) | | | | | | | |
| s-BPDA | 93 | 93 | 93 | 93 | 63 | 93 | 63 |
| a-BPDA | 7 | 7 | 7 | 7 | 7 | 7 | 7 |
| ODPA | | | | | 30 | | 30 |
| PPD | 100 | 90 | 90 | 100 | 100 | 100 | 100 |
| 3,4-ODA | | 10 | | | | | |
| TPE-R | | | 10 | | | | |
| Conditions for thermal imidization | | | | | | | |
| Scale of stirring tank [L] | 500 | 5 | 5 | 5 | 5 | 5 | 5 |
| Stirring speed [rpm] | 100 | 100 | 100 | 100 | 100 | 200 | 200 |
| Drying conditions | | | | | | | |
| Primary drying atmosphere | Under reduced pressure | Under atmospheric air | Under atmospheric air | Under atmospheric air | Under atmospheric air | Under atmospheric air | Under atmospheric air |
| Secondary drying atmosphere | Under reduced pressure | Under nitrogen | Under nitrogen | Under nitrogen | Under nitrogen | Under nitrogen | Under nitrogen |
| Secondary drying temperature [°C] | 242 | 260 | 260 | 260 | 260 | 260 | 260 |
| Secondary drying time [hour] | 12 | 2 | 2 | 2 | 2 | 2 | 2 |

(continued)

| | | | | | | | |
|---|---|---|---|---|---|---|---|
| Properties of polyimide powder | | | | | | | |
| Average primary particle size [µm] | 6.3 | 4.1 | 4.1 | 4.9 | 7.3 | 10.5 | 9.8 |
| Volume average particle size [µm] | 13.5 | 25.5 | 25.5 | 32.8 | 48.8 | 19.2 | 19.3 |
| Span value | 0.73 | 0.81 | 0.96 | 1.19 | 1.31 | 0.62 | 0.66 |
| Volume average particle size/ average primary particle size | 2.1 | 6.2 | 6.2 | 6.7 | 6.7 | 1.8 | 2.0 |
| Moisture absorption rate [%] | 1.21 | | - | - | | - | - |
| Volatile matter content [wt%] | 0.31 | 0.63 | 0.72 | 0.5 | 0.26 | 0.59 | 0.43 |
| 5% weight loss temperature [°C] | 611 | 609 | 606 | 612 | 608 | 611 | 612 |
| Cohesion strength | - | 8.9 | 11.8 | 10.6 | 17.6 | 13.6 | 9.6 |
| Properties of polyimide molded body | | | | | | | |
| Flexural strength (fired at 500°C) [MPa] | 84 | 89 | 75 | 87 | 78 | 65 | 69 |

Tables 1 and 2 show that the polyimide powders having an average primary particle size of 9 μm or less and a volume average particle size determined by laser diffraction/scattering of 10 μm or more and 80 μm or less provided polyimide molded bodies having high flexural strength which indicates high mechanical strength (Examples 1 to 9).

In contrast, when the volume average particle size was less than 10 μm or the average primary particle size was more than 9 μm, the resulting polyimide molded bodies had low flexural strength which indicates poor mechanical strength (Comparative Examples 1 to 3).

Fig. 1 shows an SEM image of the polyimide powder in Example 1, Fig. 2 shows an SEM image of the polyimide powder in Example 4, and Fig. 3 shows an SEM image of the polyimide powder in Comparative Example 2. Figs. 1(A), 2(A), and 3(A) are SEM images at a magnification of x500 and Figs. 1(B), 2(B), and 3(B) are SEM images at a magnification of x2000.

INDUSTRIAL APPLICABILITY

The polyimide powder for a molded body according to the present invention can be suitably used in production of polyimide molded bodies for use in a variety of applications.

## Claims

1. A polyimide powder for a molded body having an average primary particle size of 9 μm or less and a volume average particle size determined by laser diffraction/scattering of 10 μm or more and 80 μm or less.

2. The polyimide powder for a molded body according to claim 1, wherein the polyimide powder has a 5% weight loss temperature of 595°C or higher.

3. The polyimide powder for a molded body according to claim 1, wherein the polyimide powder has a span value of 0.65 or more and 1.5 or less, the span value being calculated by Expression (I) below from a cumulative 10% volume particle size D10, a cumulative 50% volume particle size D50, and a cumulative 90% volume particle size D90 measured by laser diffraction/scattering:

$$\text{span value} = (D90 - D10)/D50 \quad (I)$$

4. The polyimide powder for a molded body according to claim 1, wherein the polyimide powder has a volume average particle size of 10 μm or more and 35 μm or less.

5. The polyimide powder for a molded body according to claim 1, wherein the polyimide powder has a volume average particle size of 20 μm or more and 80 μm or less.

6. The polyimide powder for a molded body according to claim 4, wherein the polyimide powder has a moisture absorption rate of 1.27% or less.

7. The polyimide powder for a molded body according to claim 5, wherein the polyimide powder has a cohesion strength of 30 or less.

8. The polyimide powder for a molded body according to claim 1, wherein the polyimide powder when fired at 500°C gives a polyimide molded body having a flexural strength of 70 MPa or more.

9. A polyimide molded body formed by molding the polyimide powder for a molded body according to any one of claims 1 to 8.

10. The polyimide molded body according to claim 9 which is molded and sintered by a hot press molding method of performing sintering under compression conditions by a compression machine or a direct forming method of performing compression molding under normal temperature and then sintering under non-compression conditions.

11. A part for a semiconductor manufacturing apparatus, the part comprising the polyimide molded body according to claim 9.

**12.** An automobile part comprising the polyimide molded body according to claim 9.

(A)

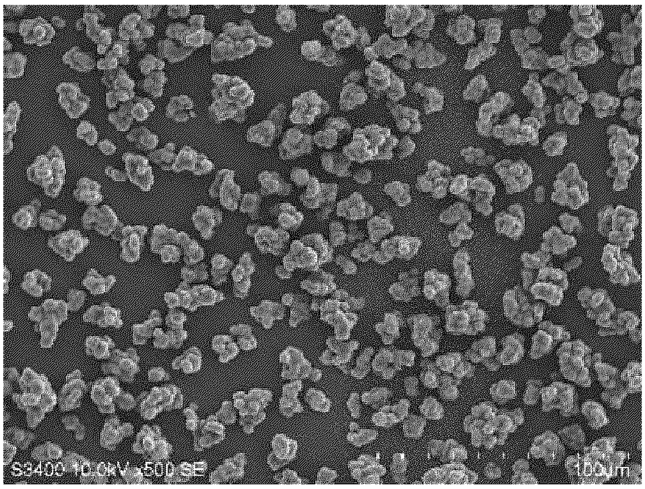


(B)

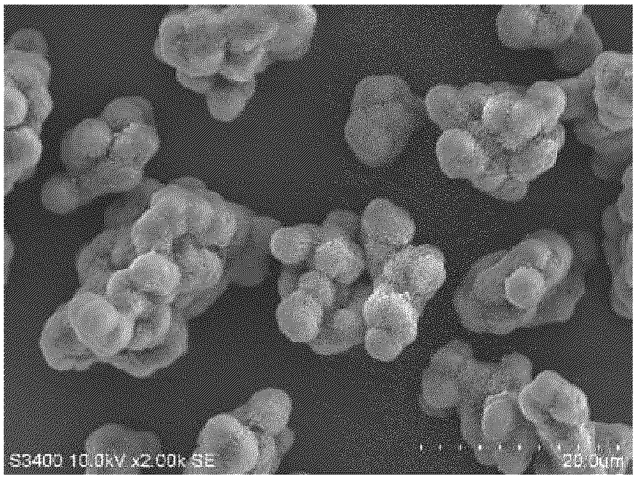


Fig. 1

(A)

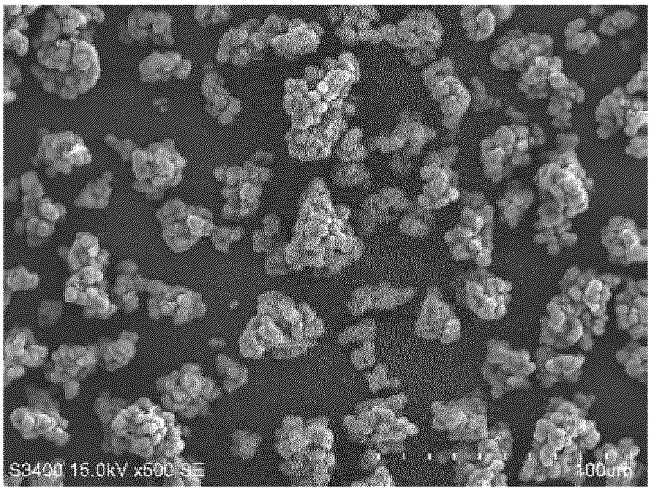


(B)

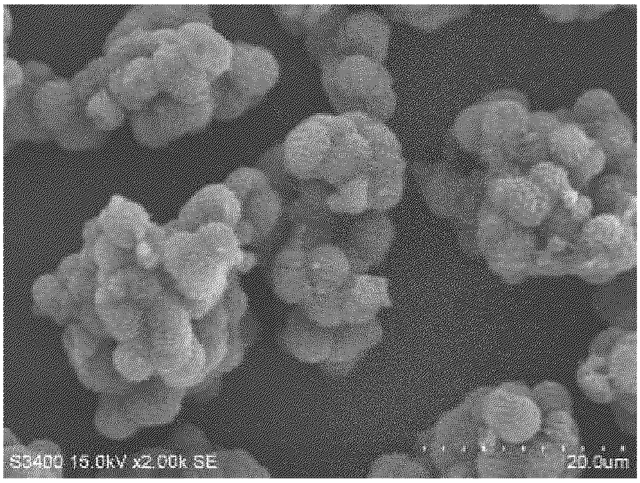


Fig. 2

(A)

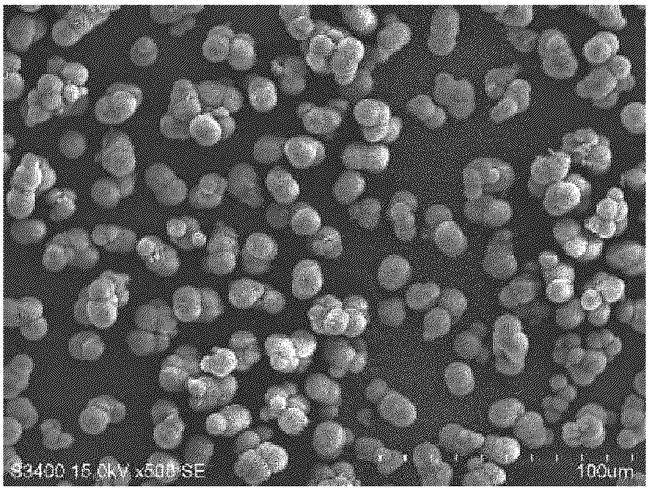


(B)

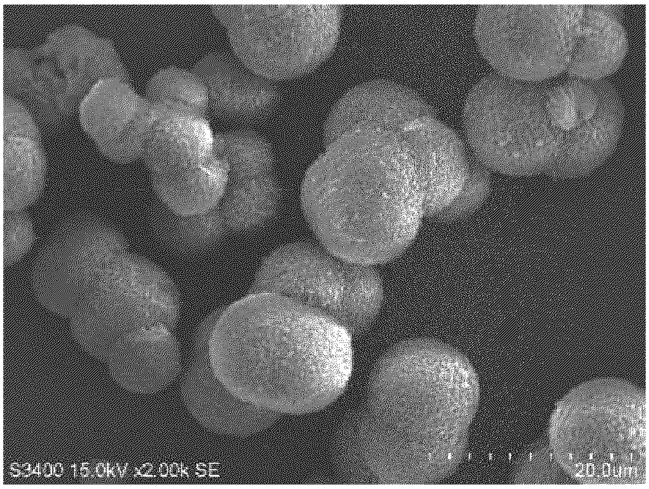


Fig. 3

**INTERNATIONAL SEARCH REPORT**

International application No. **PCT/JP2023/007413**

**A. CLASSIFICATION OF SUBJECT MATTER**

***C08G 73/10***(2006.01)i; ***B29C 67/04***(2017.01)i; ***C08J 5/00***(2006.01)i; *B29K 79/00*(2006.01)n
FI: C08G73/10; B29C67/04; C08J5/00 CFG; B29K79:00

According to International Patent Classification (IPC) or to both national classification and IPC

**B. FIELDS SEARCHED**

Minimum documentation searched (classification system followed by classification symbols)

C08G73/10; B29C67/04; C08J5/00; B29K79/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 63-277241 A (HITACHI CHEMICAL CO., LTD.) 15 November 1988 (1988-11-15) entire text | 1-12 |
| A | WO 2011/062006 A1 (TORAY INDUSTRIES, INC.) 26 May 2011 (2011-05-26) entire text | 1-12 |
| A | WO 2019/220967 A1 (MITSUBISHI GAS CHEMICAL COMPANY, INC.) 21 November 2019 (2019-11-21) entire text | 1-12 |
| A | JP 2008-222879 A (OSAKA PREFECTURAL GOVERNMENT) 25 September 2008 (2008-09-25) entire text | 1-12 |
| A | JP 2013-23606 A (UBE INDUSTRIES, LTD.) 04 February 2013 (2013-02-04) entire text | 1-12 |
| A | JP 2019-147743 A (JAPAN ADVANCED INSTITUTE OF SCIENCE AND TECHNOLOGY) 05 September 2019 (2019-09-05) whole document | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 March 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/007413**

| Patent document cited in search report | Publication date (day/month/year) | Patent family member(s) | Publication date (day/month/year) |
|---|---|---|---|
| JP 63-277241 A | 15 November 1988 | (Family: none) | |
| WO 2011/062006 A1 | 26 May 2011 | US 2012/0237771 A1<br>whole document<br>EP 2502952 A1<br>CN 102597070 A<br>KR 10-2012-0117738 A | |
| WO 2019/220967 A1 | 21 November 2019 | US 2021/0261756 A1<br>whole document<br>EP 3795639 A1<br>CN 112135880 A<br>KR 10-2021-0013010 A<br>TW 201946971 A | |
| JP 2008-222879 A | 25 September 2008 | (Family: none) | |
| JP 2013-23606 A | 04 February 2013 | (Family: none) | |
| JP 2019-147743 A | 05 September 2019 | (Family: none) | |

Form PCT/ISA/210 (patent family annex) (January 2015)